Europäisches Patentamt

European Patent Office

Office européen des brevets

(11) Numéro de publication: **0 245 299 B1**

# FASCICULE DE BREVET EUROPEEN

(45) Date de publication de fascicule du brevet: **22.07.92**

(51) Int. Cl.5: **F16B 5/06**, E04H 1/12, E04B 2/74, F16B 12/02, F16B 2/20

(21) Numéro de dépôt: **86905845.3**

(22) Date de dépôt: **26.09.86**

(86) Numéro de dépôt internationale : **PCT/FR86/00329**

(87) Numéro de publication internationale : **WO 87/03052 (21.05.87 87/11)**

(54) **ENSEMBLE DE DISPOSITIFS PERMETTANT L'ASSEMBLAGE DE PANNEAUX ENTRE EUX ET LA CONNECTION DE TUBES.**

(30) Priorité: **12.11.85 FR 8516643**
**06.08.86 FR 8611367**
**05.09.86 FR 8612467**

(43) Date de publication de la demande: **19.11.87 Bulletin 87/47**

(45) Mention de la délivrance du brevet: **22.07.92 Bulletin 92/30**

(84) Etats contractants désignés: **AT BE CH DE FR GB IT LI LU NL SE**

(56) Documents cités:
CA-A- 1 156 017       DE-A- 2 505 099
FR-A- 1 142 411       FR-A- 2 344 776
FR-A- 2 499 643       US-A- 3 944 177
US-A- 4 105 348       US-A- 4 161 375
US-A- 4 242 969       US-A- 4 470 179
US-A- 4 566 660       US-A- 4 688 829

(73) Titulaire: **HASSID, Jean-Pierre**
**12, rue de la Grande-Noue**
**F-44340 Bouguenais(FR)**

(72) Inventeur: **HASSID, Jean-Pierre**
**12, rue de la Grande-Noue**
**F-44340 Bouguenais(FR)**

(74) Mandataire: **Flavenot, Bernard**
**Société ABRITT 17, rue du Docteur Charcot**
**La Norville**
**F-91290 Arpajon(FR)**

## Description

La présente invention concerne un dispositif d'assemblage de tubes au moyen d'embouts, trouvant une application avantageuse pour la superposition de panneaux entre eux.

Dans le domaine de réalisations modulaires, l'inconvénient majeur est de ne pouvoir obtenir des ensembles plans sans écart entre les panneaux et les tubes intermédiaires. Tous les systèmes de ce type utilisent exclusivement le tube rond comme point de pivot. Les montages et démontages à force, et la complexité de certains assemblages, sont généralement posés aux utilisateurs.

Il est en effet connu des cames d'assemblage de deux tubes creux à section carrée, par exemple celle qui est décrite dans le Brevet US-A-4 105 348 de Anderson et al. Cette came comprend deux parties en opposition, chacune comportant des arêtes en saillie inclinées par rapport à l'axe de la came, les arêtes de l'une des deux parties étant sensiblement symétriques, par rapport à un plan médian, de celles de l'autre partie. Les deux parties de la came peuvent être introduites, chacune, dans l'orifice d'un tube, et l'élasticité des arêtes permet de retenir entre eux deux tubes par l'intermédiaire de la came. Cette réalisation ne donne cependant pas toute satisfaction, du fait que la force de rétention exercée par les arêtes n'est pas très intense et que, de plus, on ne peut jamais savoir à quelle profondeur chaque partie de la came est enfoncée, à moins que les deux parties ne soient séparées par une portion en saillie. Mais, dans ce cas, les deux tubes ne viennent pas au contact l'un de l'autre, ce qui constitue un inconvénient, tant sur le plan esthétique que sur celui du fonctionnement du dispositif, cette partie en saillie s'ajoutant alors à la longueur des tubes sur une longueur pouvant varier d'une came à l'autre.

Par le document US-A-4 161 375, il est connu un autre dispositif d'assemblage de tubes au moyen de cames. Dans le dispositif tel que décrit et illustré, chaque came comporte des levées qui augmentent, mais le coincement ne s'effectue que sur des pans coupés plans à chaque coin de la came. Ce coincement ne peut pas donner satisfaction. En effet, si par exemple la came et/ou la section du tube comporte des défauts de construction, soit la came ne peut entrer dans le tube, sinon en le déformant considérablement, soit trois pans coupés viennent seuls au contact de la paroi intérieure du tube, et la came ne tient pas dans ce tube.

De plus, pour que la came puisse passer de la position d'introduction à la position de coincement sur les pans coupés, le tube subit une ovalisation plus importante au passage de l'arête qui borde le pan coupé sur la paroi intérieure du rube que celle qu'elle prend quand le pan coupé est au contact de la paroi intérieure du tube en position finale de la came dans le tube. Il s'en suit que le tube est rapidement définitivement déformé et qu'il ne peut être utilisé qu'un nombre de fois relativement peu important.

La présente invention a pour but de pallier les inconvénients des dispositifs selon l'art antérieur tels que ceux décrits ci-avant en réalisant un dispositif permettant, notamment, d'obtenir un assemblage par emboîtement de cames dans le creux de tubes plus fiable, et ayant une durée de vie plus importante que celle des dispositifs selon l'art antérieur, pouvant donc être ainsi utilisé un nombre important de fois successives.

Plus précisément, la présente invention a pour objet un dispositif d'assemblage comprenant deux tubes à assembler entre eux suivant un même axe, chacun ayant un orifice carré, et un dispositif comportant deux cames identiques d'axe commun, chaque came comportant quatre portions identiques définies dans un angle solide de quatre-vingt-dix degrés et quatre arêtes délimitant les portions entre elles et s'étendant parallèlement audit axe, la distance passant par ledit axe en lui étant perpendiculaire et séparant, pour chaque came, un point d'une levée et un point de la levée opposée, ayant une valeur croissante entre une première valeur et une seconde, cette seconde valeur étant inférieure à la longueur d'une diagonale dudit orifice carré, chaque came étant insérable dans les deux dits orifices carrés des deux dits tubes, caractérisé par le fait que chaque portion présente une levée à augmentation continue sur ces quatre-vingt-dix degrés, cette augmentation étant définie dans un sens pour une came et dans le sens opposé pour l'autre came, les quatre arêtes d'une came correspondant à la levée maximale et étant dans le prolongement respectivement des quatre autres arêtes de l'autre came qui est adjacente axialement à la première came, de telle façon que l'inversion des levées d'une came par rapport à l'autre soit définie dans un plan perpendiculaire à l'axe et donne la butée de profondeur pour l'enfoncement de chaque portion de came dans un tube, les deux tubes étant aptes à être pivotés autour dudit axe jusqu'à arriver au coincement avec lesdites arêtes, la rotation plus ou moins forte des deux tubes l'un par rapport à l'autre permettant d'obtenir l'alignement des orifices carrés.

D'autres caractéristiques et avantages de la présente invention apparaîtront au cours de la description suivante donnée en regard des dessins annexés à titre illustratif, mais nullement limitatif, dans lesquels :

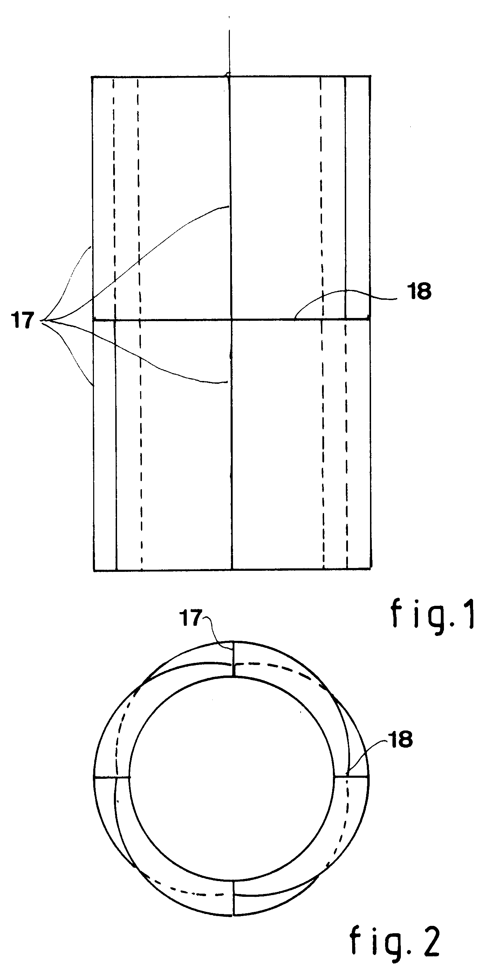

Les figures 1 et 2 représentent, vu de face et de dessus, un dispositif d'assemblage tubulaire de type "Embout" selon l'invention.

Le dispositif "Embout" selon l'invention a la forme d'une came dont les arêtes opposées ont un diamètre plus fort que le carré du tube et ne peuvent s'introduire qu'en diagonale d'un tube carré ou rond. Dans cette dernière hypothèse, on fait appel à une filière intérieurement carrée. A mi-hauteur, l'inversion des arêtes donne la butée de profondeur. Placé dans chacune des parties de deux tubes à joindre, et en tournant plus ou moins à force, on obtient l'alignement des sections carrées et une connexion efficace pas sensible à l'effort d'écartement.

L'Embout peut être réalisé en aluminium.

Le dispositif selon l'invention est particulièrement destiné à la réalisation de cloisonnements et convient parfaitement à la conception de stands.

Le dispositif "Embout" représenté par la figure 2 a les caractéristiques d'une came dont les arêtes opposées 17 ont un diamètre plus fort que le carré du tube, ne pouvant s'introduire qu'en diagonale du tube carré. A mi-hauteur, l'inversion des arêtes 18 donne la butée de profondeur. Intérieurement, l'embout peut être creux ou plein.

## Revendications

1. Dispositif d'assemblage comprenant deux tubes à assembler entre eux suivant un même axe, chacun ayant un orifice carré, et un dispositif comportant deux cames identiques d'axe commun, chaque came comportant quatre portions identiques définies dans un angle solide de quatre-vingt-dix degrés et quatre arêtes (17) délimitant les portions entre elles et s'étendent parallèlement audit axe, la distance passant par ledit axe en lui étant perpendiculaire et séparant, pour chaque came, un point d'une levée et un point de la levée opposée, ayant une valeur croissante entre une première valeur et une seconde, cette seconde valeur étant inférieure à la longueur d'une diagonale dudit orifice carré, chaque came étant insérable dans les deux dits orifices carrés des deux dits tubes, caractérisé par le fait que chaque portion présente une levée à augmentation continue sur ces quatre-vingt-dix degrés, cette augmentation étant définie dans un sens pour une came et dans le sens opposé pour l'autre came, les quatre arêtes d'une came correspondant à la levée maximale et étant dans le prolongement respectivement des quatre autres arêtes de l'autre came qui est adjacente axialement à la première came, de telle façon que l'inversion (18) des levées d'une came par rapport à l'autre soit définie dans un plan perpendiculaire à l'axe et donne la butée de profondeur pour l'enfoncement de chaque portion de came dans un tube, les deux tubes étant aptes à être pivotés autour dudit axe jusqu'à arriver au coincement avec lesdites arêtes, la rotation plus ou moins forte des deux tubes l'un par rapport à l'autre permettant d'obtenir l'alignement des orifices carrés.

## Claims

1. An assembly device comprising two tubes to be assembled together along the same axis, each of them having a square hollow, and a device comprising two identical cams having a common axis, each cam comprising four identical portions which are defined in a solid right angle and four edges (17) defining the portions between themselves and extending in a parallel direction with said axis, with the distance which crosses said axis perpendicularly and extends, relative to each cam, between a point on a generating line and a point on the opposite generating line, having an increasing value from a first value to a second value, this second value being less than the length of a diagonal of said square hollow, whereby each said cam is insertable into said two square hollows of said two tubes, characterized by the fact that each portion has a generating line continuously increasing on said right angle, in one way for a cam and in the opposite way for the other cam, with the four edges of a cam corresponding to the maximal generating line and being respectively in the extension of the four other edges of said other cam wich is axially adjacent to the first cam, such that the inversion (18) of the generating lines of a cam with respect the other cam is defined in a perpendicular plane to the axis and gives the abutment in depth for the introducing of each portion into a tube, said two tubes being turnable about said axis until a strong assembly with said edges, a more or less strong rotation of one tube in respect with the other providing the alignment of the square hollows.

## Patentansprüche

1. Fügeeinrichtung, umfassend zwei längs einer gemeinsamen Achse zu fügende Rohre, die jeweils eine quadratische Öffnung aufweisen, und ein zwei identische Nocken mit gemeinsamer Achse aufweisendes Bauteil, wobei jeder Nocken vier identische, in einem festen Winkel von neunzig Grad liegende Abschnitte und vier Kanten (17), die die Abschnitte voneinander absetzen und parallel zu der Achse verlaufen, aufweist, wobei die Distanz durch die Achse, zu ihr senkrecht, verläuft und für jeden Nocken einen Ausladungspunkt von einem Punkt entgegengesetzter Ausladung trennt, sowie mit einem ansteigenden Wert zwischen einem ersten und einem zweiten Wert, welcher zweite Wert kleiner ist als die Länge einer Diagonale der quadratischen Öffnung, und wobei jeder Nocken in die beiden quadratischen Öffnungen der beiden Rohre einfügbar ist, dadurch gekennzeichnet, daß jeder Abschnitt eine sich kontinuierlich über die neunzig Grad vergrößernde Ausladung aufweist, die für den einen Nocken in der einen Richtung und für den andern Nocken in entgegengesetzter Richtung definiert ist, daß die vier Kanten eines Nockens der maximalen Ausladung entsprechen und in der jeweiligen Verlängerung der vier anderen Kanten des anderen Nockens liegen, der axial dem ersten Nocken benachbart ist, derart, daß die Inversion (18) der Ausladungen eines Nockens relativ zum anderen in einer zur Achse senkrechten Ebene definiert ist und den Tiefenanschlag für das Einschieben jedes Abschnitts des Nockens in ein Rohr ergibt, wobei die beiden Rohre um die Achse bis zum Verklemmen mit den Kanten drehbar sind, und wobei die mehr oder weniger starke Verdrehung der beiden Rohre gegeneinander die Ausfluchtung der quadratischen Öffnungen zu erreichen gestattet.

fig.1

fig.2